(19) Europäisches Patentamt
European Patent Office
Office européen des brevets

(11) Veröffentlichungsnummer: **0 114 325**
**B1**

(12) # EUROPÄISCHE PATENTSCHRIFT

(45) Veröffentlichungstag der Patentschrift: **02.03.88**

(21) Anmeldenummer: **83112723.8**

(22) Anmeldetag: **17.12.83**

(51) Int. Cl.4: **C 09 B 47/32,** C 09 B 67/34, D 21 H 1/46, D 21 H 3/80 // D21C5/02

(54) **Kupferphthalocyaninfarbstoffe, ihre Herstellung, ihre wässrigen Lösungen und ihre Verwendung zum Färben von Papier.**

(30) Priorität: **29.12.82 DE 3248466**

(43) Veröffentlichungstag der Anmeldung:
**01.08.84 Patentblatt 84/31**

(45) Bekanntmachung des Hinweises auf die Patenterteilung:
**02.03.88 Patentblatt 88/09**

(84) Benannte Vertragsstaaten:
**CH DE FR GB LI**

(56) Entgegenhaltungen:
**EP-A-0 035 470**
**CH-A- 446 578**
**DE-A-1 569 783**
**US-A-3 592 581**
**US-A-3 954 392**

**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Groll, Manfred, Dr.**
**Paul-Klee-Strasse 68c**
**D-5090 Leverkusen 1 (DE)**
Erfinder: **Ockelmann, Dieter, Dr.**
**Gerstenkamp 10**
**D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 114 325 B1

**Beschriebung**

Gegenstand der Erfindung sind basische Kupferphthalocyaninfarbstoffe der allgemeinen Formel

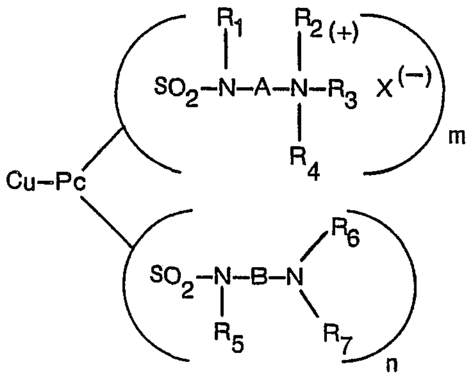

(I)

in der

Cu—Pc den Rest eines m + n-wertigen Kupferphthalocyaninrestes,

A Alkylen,

B einen Rest der Formel

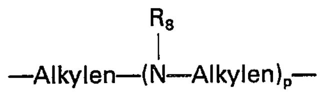

$R_1$ Wasserstoff oder Alkyl,

$R_2$, $R_3$ und $R_4$ unabhängig voneinander Alkyl, das durch Hydroxy- oder Alkoxygruppen substituiert sein kann,

$R_5$ Wasserstoff, Alkyl oder Aminoalkyl,

$R_6$ und $R_7$ unabhängig voneinander Wasserstoff, oder Alkyl, das durch Hydroxy-, Alkoxy- oder Aminogruppen substituiert sein kann, und

$R_8$ Wasserstoff oder Alkyl bedeuten, oder

$R_1$ mit $R_2$,

$R_2$ mit $R_3$,

$R_5$ mit $R_6$ und/oder

$R_6$ mit $R_7$ ringgeschlossen sein können,

m eine Zahl von 1,0 bis 2,5 und

n eine Zahl von 0 bis 1,4 bedeuten, wobei

m + n 1,8 bis 2,5 ist,

p 0, 1, 2 oder 3 und

$X^{(-)}$ ein Anion bedeuten,

ihre wäßrigen Lösungen, ihre Herstellung und ihre Verwendung zum Färben von Papier.

Die Alkylenreste haben vorzugsweise 2—8 C-Atomen. Insbesondere haben die Alkylenreste A 2—5 C-Atome und die Alkylenreste in B 2—4 C-Atome. Bevorzugte Alkyl- und Alkoxyreste sind solche mit 1—4 C-Atomen.

Die Reste $R_1$ und $R_2$ bzw. $R_5$ und $R_6$ können zusammen z.B. für eine Ethylenbrücke stehen und dann gemeinsam mit der Gruppe —N—A—N— bzw. —N—B—N— z.B. einen Piperazinring bilden.

Die Reste $R_2$ und $R_3$ bzw. $R_6$ und $R_7$ können gemeinsam mit dem Stickstoffatom einen 5-, 6- oder 7-gliedrigen Ring, beispielsweise einen Pyrrolidin-, Piperidin-, Morpholin- oder gegebenenfalls substituierten Piperazin- oder Aza-cycloheptan-Ring bilden. Der Piperazinring kann am Stickstoff durch eine $C_1$—$C_4$-Alkylgruppe substituiert sein, die ihrerseits Hydroxy- oder Aminogruppen tragen kann.

Als Anion kommen übliche farblose organische und anorganische Anionen, beispielsweise Chlorid, Bromid, Jodid, Hydroxyl, Hydrogensulfat, Sulfat, Methosulfat, Ethosulfat, Formiat, Acetat, Propionat, Benzolsulfonat und Toluolsulfonat in Betracht.

Von den Farbstoffen der Formel (I) sind die Farbstoffe der Formel.

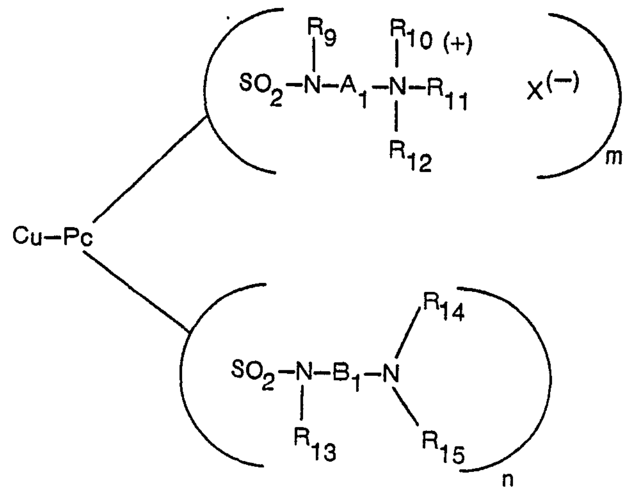

(II)

hervorzuheben, in der

Cu—Pc, p und $X^{(-)}$ die in Formel (I) angegebene Bedeutung haben, und

$A_1$ $C_2$—$C_5$ -Alkylen,

$B_1$ einen Rest der Formel

$R_{16}$

$C_2$- oder $C_3$-Alkylen—(N—$C_2$- oder $C_3$-Alkylen$)_p$—

$R_9$ Wasserstoff oder $C_1$—$C_4$-Alkyl,

$R_{10}$, $R_{11}$ und $R_{12}$ unabhängig voneinander Methyl oder $C_2$—$C_4$-Alkyl, das durch eine $C_1$—$C_4$-Alkoxy- oder eine oder zwei Hydroxygruppen substituiert sein kann,

$R_{13}$ Wasserstoff, Methyl, $C_2$—$C_4$-Alkyl, das durch eine Aminogruppe substituiert sein kann,

$R_{14}$ und $R_{15}$ unabhängig voneinander Wasserstoff, Methyl, $C_2$—$C_4$-Alkyl, das durch eine $C_1$—$C_4$-Alkoxy- oder Amino-Gruppe oder eine zwei Hydroxy-Gruppen substituiert sein kann, und

$R_{16}$ Wasserstoff oder $C_1$—$C_4$-Alkyl bedeuten, oder

$R_9$, $R_{10}$ und —N—$A_1$—N— gemeinsam einen Piperazinring bilden,

$R_{13}$, $R_{14}$ und —N—$B_1$—N— gemeinsam einen Piperazinring bilden,

$R_{10}$ und $R_{11}$ und/oder

$R_{14}$ und $R_{15}$ gemeinsam mit dem Stickstoffatom einen Pyrrolidin-, Piperidin-, Morpholin- oder Piperazin-ring bilden, der einen Methyl- oder einen gegebenenfalls durch Hydroxyl oder Amino substituierten $C_2$—$C_4$-Alkylrest tragen kann, und

die Summe von m und n = 2,0—2,3 ist.

Besonders bevorzugt sind Farbstoffe der Formel (II), in der

$A_1$ für 1,2-Ethylen oder 1,3-Propylen,

$R_9$ und $R_{13}$ für Wasserstoff oder Methyl,

$R_{10}$, $R_{11}$, $R_{12}$ unabhängig voneinander für Methyl, Ethyl, 2-Hydroxyethyl, oder 2,3-Dihydroxypropyl,

$R_{14}$ und $R_{15}$ unabhängig voneinander für Wasserstoff, Methyl oder Ethyl und

$R_{16}$ für Wasserstoff oder Methyl stehen, oder

$R_9$, $R_{10}$ und —N—$A_1$—N— gemeinsam einen Piperazinring bilden,

$R_{10}$ und $R_{11}$ gemeinsam mit dem Stickstoffatom einen Morpholinring bilden, und/oder

$R_{13}$, $R_{14}$ und —N—$B_1$—N— gemeinsam einen Piperazinring bilden.

Man erhält die Farbstoffe der Formel (I) durch Umsatz von Kupferphthalocyaninsulfonsäurechloriden der Formel

$$Cu—Pc—(SO_2Cl)_{m+n} \qquad (III)$$

mit m Mol eines Amins der Formel

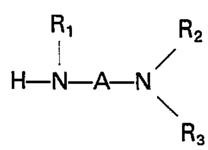

(IV)

gegebenenfalls anschließenden Umsatz mit n Mol eines Amins der Formel

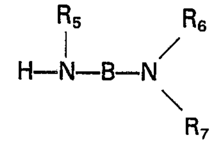 (V)

eventuell unter Zusatz eines nicht mit dem Alkylierungsmittel reagierenden säurebindenden Mittels, in Wasser oder einer Mischung aus Wasser und einem mit Wasser mischbaren organischen Lösungsmittel, wobei man nach Umsatz mit dem Amin der Formel (IV) mindestens eine der basischen Gruppen pro Molekül mit einer Verbindung der Formel

$$R_4—X \qquad (VI)$$

quaterniert,

die erhaltenen Farbstoffe entweder isoliert oder durch Zugabe einer Carbonsäure der Formel

$$R_{17}—COOH \qquad (VII)$$

wobei $R_{17}$ für Wasserstoff oder gegebenenfalls durch Chlor, Hydroxy, $C_1$—$C_4$-Alkoxy oder Carboxy substituiertes $C_1$—$C_4$-Alkyl steht,

oder deren Mischungen,

gegebenenfalls überschüssiges Quaternierungsmittel zerstört und den Farbstoff in Lösung bringt.

Kupferphthalocyanin-sulfonsäurechloride der Formel (III) können die Sulfonsäurechlorid-Gruppen in den 3- oder 4-Stellungen der Benzol-Kerne tragen. Sie werden in üblicher Weise durch Behandeln von Kupferphthalocyanin oder Kupferphthalocyaninsulfonsäuren mit Chlorsulfonsäure und Thionylchlorid erhalten. Zur Isolierung werden die Chlorsulfonsäaure-Lösungen auf Eis gegeben, die ausgefallenen Kupferphthalocyanin-sulfonsäurechloride abgesaugt und in Form wäßrigen Pasten weiter verarbeitet.

Als Beispiele für Amine der Formel (IV) seien genannt:

1-Amino - 2 - dimethylamino - ethan, 1 - Amino - 2 - diethylamino - ethan, 1 - Methylamino - 2 - dimethylamino - ethan, 1 - Amino - 3 - dimethylamino - propan, 1 - Amino - 3 - diethylamino - propan, 1 - Methylamino - 3 - dimethylamino - propan, 4 - Amino - 1 - Diethylaminopentan,

2 - [(3 - Aminopropyl) - methylamino] - ethanol, 2,2' - Bishydroxy - ethyl - (3 - aminopropyl) - amin, N - (3 - Aminopropyl) - morpholin, N - (2 - Aminoethyl) - morpholin, N - (3 - Aminopropyl) - pyrrolidin, N - (3 - Aminopropyl) - piperidin, N - Methyl - piperazin, N - (2 - Hydroxyethyl) - piperazin.

Als Beispiele für Amine der Formel (V) seien genannt die Beispiele der Formel IV sowie zusätzlich N,N - Bis - (3 - aminopropyl) - amin, N,N - Bis(3 - aminopropyl) - methylamin, N,N - Bis(2 - aminoethyl) - amin, N,N - Bis - (2 - aminoethyl) - methylamin, N,N' - Bis - (2 - aminoethyl) - 1,2 - diaminoethan, 1,11 - Diamino - 3,6,9 - triazaundecan, N - (2 - Aminoethyl) - piperazin.

Als Beispiele für aliphatische Carbonsäure der Formel (VII) seien genannt:

Ameisensäure, Essigsäure, Chloressigsäure, Hydroxyessigsäure, Propionsäure, Milchsäure, Citronensäure, 2 - Methoxyessigsäure oder 2 - Ethoxyessigsäure.

Beispiele für die Quaternierungsmittel (VI) sind: Dimethylsulfat, Diethylsulfat, p-Toluolsulfonsäure - methyl - ester, p - Toluolsulfonsäure - ethylester, Methylchlorid, Methylbromid, Methyljodid, 3 - Chlor - 1,2 - propandiol, 2 - Chlorethanol sowie Ethylenoxid und Propylenoxid in Gegenwart einer Verbindung, die das Anion $X^{(-)}$ liefert.

Beispiele für säurebindende Mittel der oben genannten Art sind: Magnesiumoxid, Magnesiumcarbonat,

Calciumoxid, Natrium- oder Kaliumhydrogencarbonat, Soda, Pottasche, Natronlauge, Kalilauge, Lithiumhydroxid oder Lithiumcarbonat.

Aus fabrikationstechnischen Grunden ist es vorteilhaft, die Farbstoffe in Form ihrer Flüssigeinstellungen einzusetzen. Die erfindungsgemäß erhaltenen wäßrigen Farbstofflösungen können bis zu 30 Gew.-% Farbstoff enthalten.

Es ist bekannt, daß zum Färben von Papier mehr und mehr Farbstoffe eingesetzt werden, die eine gute chemische Bleichbarkeit haben, um auf diese Weise den Ausschuß von gefärbter Papiermasse nach einem chemischen Bleichvorgang z.B. mit Chlorlauge wieder für die Papierherstellung einsetzen zu können.

Auf Basis von Phthalocyanin-sulfonsäureamiden aufgebaute basische Phthalocyanin-Farbstoffe sind zum Beispiel in den deutschen Auslegeschriften 1 061 010, 1 064 661 und 1 049 996 und der schweizerischen Patentschrift 446 578 beschrieben. Die mit ihnen erhaltenen Papierfärbungen sind jedoch mit Chlorlauge schlecht oder nicht bleichbar.

Es wurde nun überraschenderweise gefunden, daß man mit Chlorlauge sehr gut bleichbare basische Phthalocyanin-sulfonsäureamid-Farbstoffe erhält, wenn man den Sulfierungsgrad und damit die Anzahl der basischen Sulfonsäureamid-Gruppen auf 1,8 bis 2,5 je Cu—Pc-Molekül beschränkt und gleichzeitig mindestens eine der basischen Sulfonamid-Gruppen quaterniert. Beide Maßnahmen sind gemeinsam erforderlich. Eine Begrenzung des Sulfierungsgrade auf 1,8 bis 2,5 Sulfonsäureamid-Gruppen oder die Quaternierung eines drei oder vier basische Sulfonsäure-amid-Gruppen enthaltenden Pc-Farbstoffes allein

reicht nicht aus, um Farbstoffe mit guter Bleichbarkeit zu erhalten. Die erwähnte Quaternierung erhöht zusätzlich die Beständigkeit der erfindungsgemäß erhaltenen Farbstoffe gegenüber hartem Wasser.

Neben der bereits erwähnten sehr guten Bleichbarkeit zeichnen sich die erfindungsgemäß erhaltenen Farbstoffe durch eine gute bis sehr gute Substantivität auf Papier aus. Die mit ihnen erhaltenen Papierfärbungen haben gute bis ausgezeichnete Ausblutechtheiten. Die sehr gute Löslichkeit der erfindungsgemäßen Farbstoffe ermöglicht die Herstellung von Flüssigeinstellungen, die in der Praxis in steigendem Maße bevorzugt werden.

Die Verwendung zum Färben von Papier erfolgt nach herkömmlichen Verfahren. Vorzugsweise werden die Farbstoffe zum Färben in der Masse verwendet. Hierbei werden die Lösungen der Farbstoffe dem sogenannten Dünnstoff oder Dickstoff vor dem Erreichen des Stoffablaufs zugegeben.

Weitere Appliziermöglichkeiten sind folgende:

Entweder man sprüht eine Lösung des Farbstoffes auf das Papier auf oder aber man fährt das ungefärbte Papier vor Erreichen der Trockenpartie durch eine Leimpresse, in deren Trog sich die Lösung des erfindungsgemäßen Farbstoffes befindet. Das durch Besprühen oder Eintauchen gefärbte Papier wird anschließend in der Trockenpartie getrocknet.

Beispiel 1

75 mMol einer feuchten CuPc—(3)—$(SO_2Cl)_{2,2}$-Paste werden zu einer Mischung aus 100 g Eis, 100 g Wasser, 22,5 ml N - (3 - Aminopropyl) - morpholin und 8,5 g Magnesiumoxid gegeben. Man läßt die Temperatur in 3 Stunden von 0°C auf 20°C ansteigen, rührt 2 Stunden bei 20—25°C nach und heizt mit einer Aufheizungsrate von 10°C pro Stunde bis auf 65°C. Eine Stunde wird bei 65°C nachgerührt, abgekühlt, mit 90 ml Wasser verdünnt und in 10 Minuten mit 23,5 ml Dimethylsulfat versetzt. Man rührt 1 Stunde bei 20—25°C, 1 Stunde bei 30—35°C und 30 Minuten bei 50°C. 100 ml 85 %ige Ameisensäure werden zugegeben, die Lösung wird 20 Minuten auf 95°C aufgeheizt und nach dem Abkühlen auf 20—30°C mit weiteren 40 ml 85 %iger Ameisensäure verdünnt. Es werden 640 ml einer flüssigen Farbstofflösung der Formel

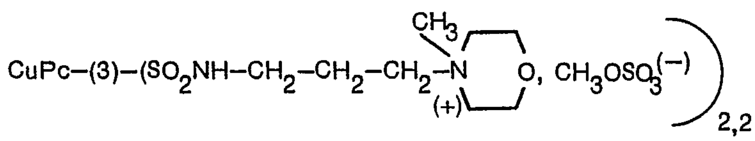

λmax 608 nm

erhalten, die Papier in klaren Türkistönen mit sehr guter chemischer Bleichbarkeit färben.

Ersetzt man das in Beispiel 1 verwendete N - (3 - Aminopropyl) - morpholin durch äquimolare Mengen der in Spalte 2 in der nachfolgenden Tabelle genannten Amine, so erhält man Farbstoffe der Formel.

$$CuPc—(3)—(SO_2Z)_{2,2}$$

bei denen Z die in der nachfolgenden Spalte 3 aufgeführte Bedeutung hat. Auch diese Farbstoffe färben Papier aus neutralem bis saurem Bad in türkisblauen Farbtönen und lassen sich chemisch sehr gut bleichen.

| Beispiel | Amin | Z Farbton | λ$_{max}$ in nm | |
|---|---|---|---|---|
| 1b | 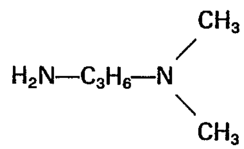 | 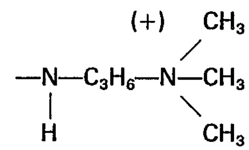 $CH_3OSO_3^{(-)}$ | Türkisblau | 607 |
| 1c | 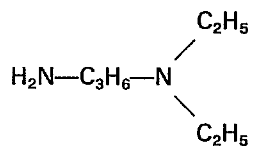 | 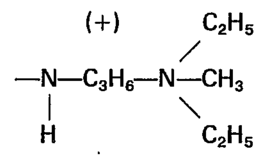 $CH_3OSO_3^{(-)}$ | „ | 608 |
| 1d | 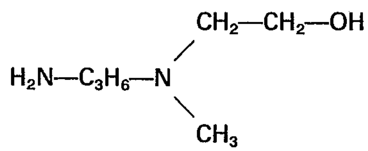 | 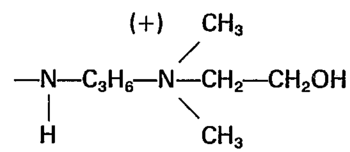 $CH_3OSO_3^{(-)}$ | „ | 609 |
| 1e | 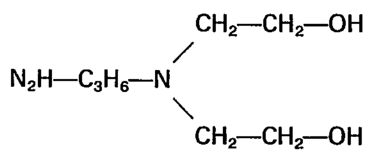 | 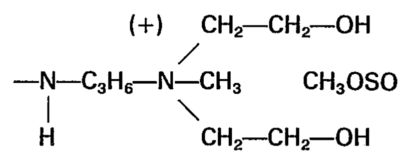 $CH_3OSO^{(-)}$ | „ | 610 |

| Beispiel | Amin | Z | Farbton | $\lambda_{max}$ in nm |
|---|---|---|---|---|
| 1f | 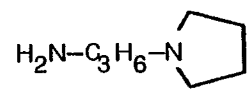 | 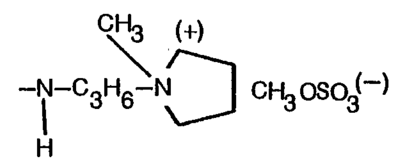 | türkisblau | 607 |
| 1g | 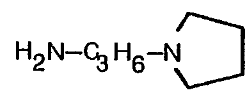 | 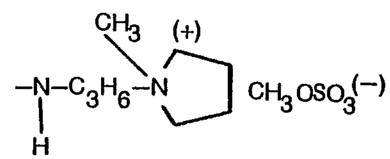 | " | 608 |
| 1h | 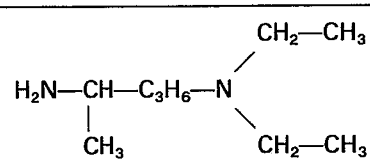 | 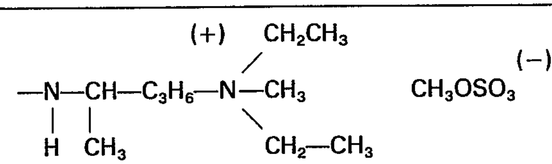 | " | 615 |
| 1i | 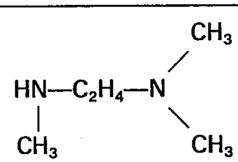 | 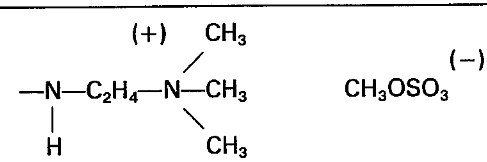 | " | 615 |

| Beispiel | Amin | Z | Farbton | $\lambda_{max}$ in nm |
|---|---|---|---|---|
| 1k | 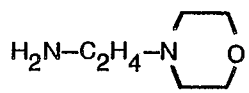 | 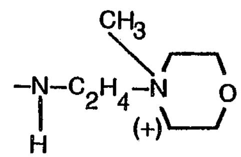 $CH_3OSO_3^{(-)}$ | türkisblau | 614 |
| 1l | 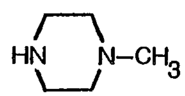 | 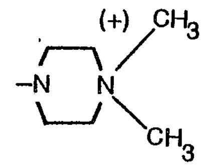 $CH_3OSO_3^{(-)}$ | " | 611 |
| 1m | 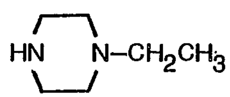 | 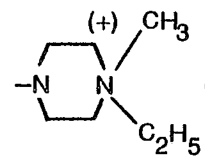 $CH_3OSO_3^{(-)}$ | " | 610 |
| 1n | 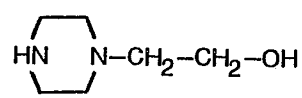 | 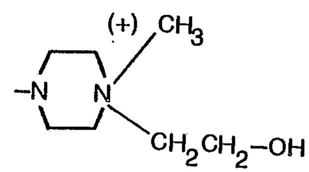 $CH_3OSO_3^{(-)}$ | " | 608 |
| 1o | 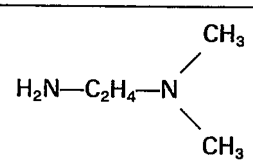 | 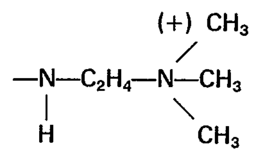 $CH_3OSO_3^{(-)}$ | " | 615 |

| Beispiel | Amin | Z | Farbton | $\lambda_{max}$ in nm |
|---|---|---|---|---|
| 1p | 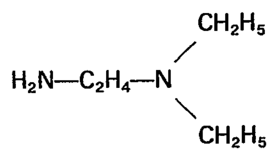 | 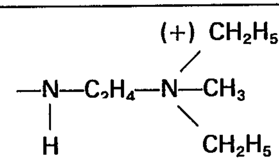 $CH_3OSO_3^{(-)}$ | türkisblau | 615 |

Beispiel 2

Ersetzt man das im Beispiel 1 verwendete Dimethylsulfat durch äquivalente Mengen der in der Spalte 2 der nachfolgenden Alkylierungsmittel, so erhält man eine Farbstofflösung der Formel

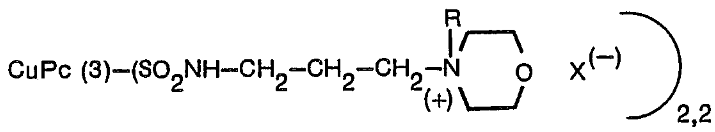

bei der R und X die in der nachfolgenden Tabelle aufgeführten Bedeutungen haben.

Auch diese Farbstoffe färben Papier aus neutralen bis sauren Lösungen in türkisblauen, gut bleichbaren Farbtönen.

| Beispiel | Alkylierungsmittel | R | $X^{(-)}$ | Farbton |
|---|---|---|---|---|
| 2a | $(C_2H_5)_2SO_2$ | $C_2H_5$ | $CH_3CH_2OSO_3^{(-)}$ | Türkisblau |
| 2b | 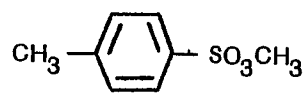 | $CH_3$ | 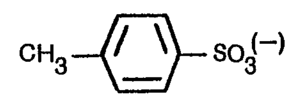 | " |
| 2c | 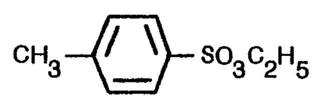 | $C_2H_5$ | 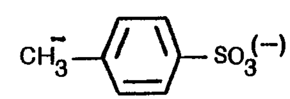 | " |
| 2d | $CH_2OH—CHOH—CH_2Cl$ | $CH_2OH—CHOH—CH_2$ | $Cl^{(-)}$ | " |

Beispiel 3

150 mMol einer feuchten CuPc—(3)—$(SO_2Cl)_{2,2}$—Paste werden in einem druckfesten Gefäß in 400 ml Eis/Wasser und 50 ml N - (3 - Aminopropyl) - morpholin eingetragen. Man läßt die Temperatur in 3 Stunden von 0°C auf 20°C ansteigen, gibt 18 g Magnesiumoxid zu und heizt dann mit einer Aufheizrate von 10°C pro Stunde bis auf 65°C. Man hält noch 1 Stunde auf 65°C, kühlt ab und preßt bei 30°C Methylchlorid bis zu einem Druck von 3 bis 5 bar auf. Die Temperatur wird in einer Stunde bis auf 40°C gesteigert und dort gehalten, bis keine Druckabnahme mehr erfolgt. Überschüssiges Methylchlorid wird abgeblasen und die Reaktionsmischung mit 220 ml 85 %iger Ameisensäure versetzt. Es werden 900 ml einer Farbstofflösung der Formel

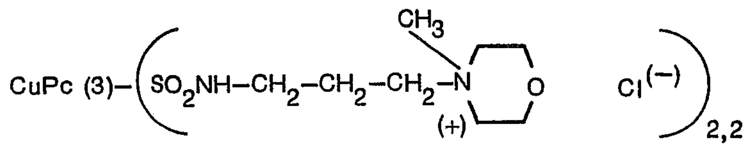

λ max 608 nm

erhalten, die Papier in türkisblauen Tönen bei sehr guter Bleichbarkeit färbt.

Beispiel 4

150 mMol einer feuchten CuPu-(3)-$(SO_2Cl)_{2,2}$-Paste werden in einen druckfesten Gefäß in 400 ml Eis/Wasser und 50 ml N-(3-Aminopropyl)-morpholin eingetragen. Man läßt die Temperatur in 3 Stunden von 0°C auf 20°C ansteigen, gibt 18 g Magnesiumoxid zu und heizt dann mit einer Aufheizrate von 10°C pro Stunde bis auf 65°C. Man hält noch 1 Stunde auf 65°C, kühlt ab und leitet bei 20—25°C 16 g Ethylchlorid in 15 Minuten ein. Die Temperatur wird in 1 Stunde auf 30°C erhöht, 1 Stunde dort gehalten, in 1 Stunde auf 40°C erhöht und 2 Stunden dort gehalten. Mit 220 ml 85 %iger Ameisensäure verdünnt.

Es wird eine Farbstofflösung der Formel

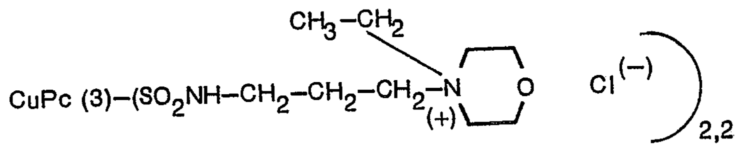

λ max 608 nm

erhalten; die Papier in türkisblauen Tönen färbt und chemisch gut bleichbar ist.

Beispiel 5

Ersetzt man das im Beispiel 4 genannte Ethylchlorid durch 24 g Methylbromid, so erhält man einen Farbstoff der Formel

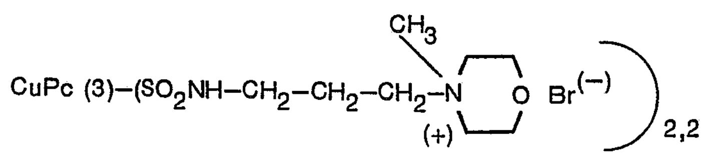

λ max 608 nm

der in seinen Eigenschaften dem Beispiel 4 entspricht.

Beispiel 6

150 mMol einer feuchten CuPu-(3)-$(SO_2Cl)_{2,2}$-Paste werden in einem druckfesten Gefäß in 400 ml Eis/Wasser und 50 ml N-(3-Aminopropyl)-morpholin eingetragen. Man läßt die Temperatur in 3 Stunden von 0°C auf 20°C ansteigen, gibt 18 g Magnesiumoxid zu und heizt dann mit einer Aufheizrate von 10°C pro Stunde bis auf 65°C. Man hält noch 1 Stunde auf 65°C, kühlt ab und tropft bei 20—25°C 27 g Ethylbromid in 15 Minuten zu. Die Temperatur wird in 1 Stunde auf 30°C erhöht, 1 Stunde dort gehalten, in 1 Stunde auf 40°C erhöht und 2 Stunden dort gehalten. Mit 220 ml 85%iger Ameisensäure wird verdünnt. Es wird eine Farbstofflösung der Formel

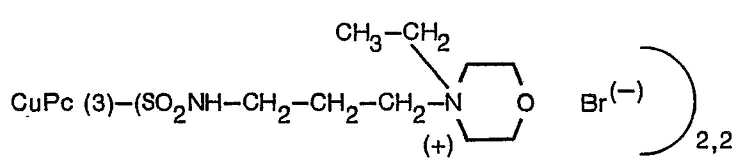

λ max 608 nm
erhalten, die Papier in türkisblauen Tönen färbt und chemisch gut bleichbar ist.

Beispiel 6a

Ersetzt man das im Beispiel 6 genannte Ethylbromid durch 32,5 g Methyljodid, so erhält man einen Farbstoff der Formel

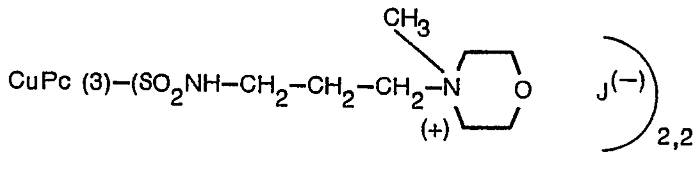

λ max 608 nm
der in seinen Eigenschaften dem Beispiel 6 entspricht.

Beispiel 7

15 mMol einer feuchten CuPc-(3)-$(SO_2Cl)_{2,2}$-Paste werden zu 5,3 ml N-(3-Aminopropyl)-morpholin in 40 ml Eis/Wasser gegeben. Man läßt die Temperatur in 2 Stunden 30 Minuten von 0°C auf 20°C ansteigen. Sobald der pH unter 10,0 fällt, wird er mit 2N—LiOH auf 10,0 bis 9,5 gehalten. Man rührt 1 Stunde bei 20—25°C und heizt dann mit einer Aufheizrate von 5°C pro Stunde bis auf 65°C und hält die Temperatur noch für 1 Stunde.

Man kühlt auf 20—25°C, gibt 5,7 ml Dimethylsulfat in 10 Minuten zu und rührt 1 Stunde nach. In zwei Stunden erhöht man die Temperatur von 20°C auf 40°C. Für 30 Minuten wird noch auf 50°C aufgeheizt, 20 ml Ameisensäure werden zugegeben und die Lösung wird für 30 Minuten auf 95°C erhöht. Es werden 100 ml einer türkisfarbenen Lösung erhalten, die Papier in klaren Türkistönen färbt und sehr gut bleichbar ist.

Beispiel 7b

Man verfährt wie in Beispiel 7 nur wird der pH mit 2N—NaOH gehalten. Es werden 110 ml einer Farbstofflösung erhalten, die Papiere ebenfalls in klaren Türkistönen färbt und sehr gut bleichbar ist.

Beispiel 7c

Man verfährt wie in Beispiel 7 nur wird der pH mit 2N—KOH gehalten. Es werden 110 ml einer Farbstofflösung erhalten, die in den Eigenschaften dem Beispiel 7b entspricht.

Beispiel 8

Es wird wie in Beispiel 1 verfahren, nur tauscht man das Magnesiumoxid gegen 2,0 g Calciumoxid aus. Nach einer Klärfiltration wird eine Farbstofflösung erhalten, die dem Beispiel 1 entspricht.

Beispiel 9

75 mMol einer feuchten CuPc-(3)-$(SO_2Cl)_{2,5}$-Paste werden zu einer Mischung aus 100 g Eis, 100 g Wasser, 24,5 ml N-(3-Aminopropyl)-morpholin und 9,3 g Magnesiumoxid gegeben. Man läßt die Temperatur in 3 Stunden von 0°C auf 20°C ansteigen, rührt 2 Stunden bei 20—25°C nach und heizt mit einer Aufheizungsrate von 10°C pro Stunde bis auf 65°C.

Eine Stunde wird bei 65°C nachgerührt, abgekühlt, mit 90 ml Wasser verdünnt und in 15 Minuten mit 25,5 ml Dimethylsulfat versetzt. Man rührt 1 Stunde bei 20—25°C, 1 Stunde bei 30—35°C und 30 Minuten bei 50°C. 100 ml 85 %ige Ameisensäure werden zugegeben, die Lösung wird 20 Minuten auf 95°C aufgeheizt und nach dem Abkühlen auf 20—30°C mit weiteren 40 ml 85 %iger Ameisensäure verdünnt. Es werden 645 ml einer flüssigen Farbstofflösung der Formel

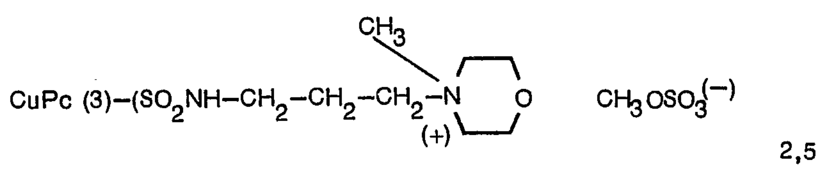

λ max 609 nm
erhalten, die Papier in klaren Türkistönen mit sehr guter chemischer Bleichbarkeit färben.

Ersetzt man das in Beispiel 9 verwendete N-(3-Aminopropyl)-morpholin durch äquimolare Mengen der Amine, die in der nach Beispiel 1 folgenden Tabelle in Spalte 2 genannt werden, so erhält man Farbstoffe der Formel

$$CuPu—(3)—(SO_2Z)_{2,5}$$

bei denen Z die in der genannten Tabelle aufgeführte Bedeutung hat. Auch diese Farbstoffe färben Papier aus neutralem bis saurem Bad in türkisblauen Farbtönen und lassen sich chemisch sehr gut bleichen.

Beispiel 10

75 mMol einer feuchten CuPu-(3)-$(SO_2Cl)_{2,0}$-Paste werden zu einer Mischung aus 100 g Eis, 100 g Wasser, 19,6 ml N-(3-Aminopropyl)-morpholin und 7,5 g Magnesiumoxid gegeben. Man läßt die Temperatur in 3 Stunden von 0°C auf 20°C ansteigen, rührt 2 Stunden bei 20—25°C nach und heizt mit einer Aufheizungsrate von 10°C pro Stunde bis auf 65°C. Eine Stunde wird bei 65°C nachgerührt, abgekühlt, mit 90 ml Wasser verdünnt und in 10 Minuten mit 20,5 ml Dimethylsulfat versetzt. Man rührt 1 Stunde bei 20—25°C, 1 Stunde bei 30—35°C und 30 Minuten bei 50°C. 100 ml Ameisensäure werden zugegeben, die Lösung wird 20 Minuten auf 95°C aufgeheizt und nach dem Abkühlen auf 20—30°C mit weiteren 40 ml 85 %iger Ameisensäure verdünnt. Es werden 635 ml einer flüssigen Farbstofflösung der Formel

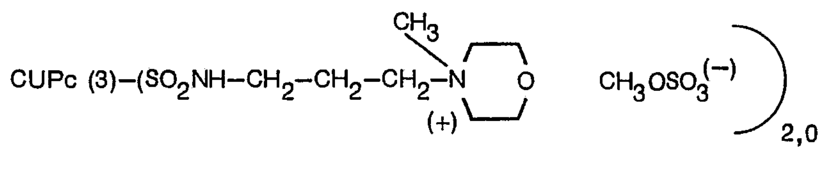

λ max 605 nm
erhalten, die Papier in klaren Türkistönen mit sehr guter chemischer Bleichbarkeit färben.

Ersetzt man das in Beispiel 10 verwendete N-(3-Aminopropyl)-morpholin durch äquimolare Mengen der Amine, die in der nach Beispiel 1 folgenden Tabelle genannt werden, so erhält man Farbstoffe der Formel

$$CuPc—(3)—(SO_2Z)_{2,0}$$

bei denen Z die in der genannten Tabelle aufgeführt Bedeutung hat. Auch diese Farbstoffe färben Papier aus neutralem bis saurem Bad in türkisblauen Farbtönen und lassen sich chemisch sehr gut bleichen.

Beispiel 11a

Es wird wie in Beispiel 1 verfahren, nur werden statt der 85 %igen Ameisensäure 135 ml Essigsäure eingesetzt. Man erhält 635 ml einer Farbstofflösung, die in ihren Eigenschaften dem Beispiel 1 entspricht.

Beispiel 11b

Es wird wie in Beispiel 1 verfahren, nur werden statt der 85 %igen Ameisensäure 140 ml 2-Methoxyessigsäure eingesetzt. Man erhält 640 ml einer Farbstofflösung, die in ihren Eigenschaften dem Beispiel 1 entspricht.

Beispiel 11c

Es wird wie in Beispiel 1 verfahren, nur werden statt der 85 %igen Ameisensäure 140 ml Propionsäure eingesetzt. Man erhält 640 ml einer Farbstofflösung, die in ihren Eigenschaften dem Beispiel 1 entspricht.

Beispiel 11d

Es wird wie in Beispiel 1 verfahren, nur werden statt der 85 %igen Ameisensäure 135 ml Milchsäure verwendet. Man erhält 635 ml einer Farbstofflösung, die in ihren Eigenschaften dem Beispiel 1 entspricht.

Beispiel 12

Es wird wie in Beispiel 1 verfahren, nur wird nach der Umsetzung mit Dimethylsulfat mit konzentrierter Schwefelsäure auf pH 1,5 bis 1,8 angesäuert. Nach dem Aufheizen und anschließenden Abkühlen wird mit 130 ml Essigsäure verdünnt. Es werden 635 ml einer Farbstofflösung erhalten, die in ihren Eigenschaften dem Beispiel 1 entspricht.

Beispiel 13

50 mMol einer feuchten CuPC-(3)-$(SO_2Cl)_{2,2}$-Paste werden zu einer Mischung aus 16,9 g N-(3-Aminopropyl)-morpholin und 120 ml Eis/Wasser gegeben. Man läßt die Temperatur in 2 Stunden von 0°C auf 20°C ansteigen. Wenn nach etwa 2 Stunden der pH unter 10,0 fällt, werden als säurebindendes Mittel 4,3 g Magnesiumoxid zugegeben. Mit einer Aufheizrate von 5°C pro Stunde wird auf 65°C aufgeheizt, 60 Minuten bei dieser Temperatur gehalten, heiß abgesaugt und dreimal mit je 50 ml Wasser, dem etwas Amin zum alkalisch Stellen zugefügt wird, gewaschen. Es werden 52,5 g Farbstoffbase erhalten. 16,2 (15 mMol) dieser zwischenisolierten Farbstoffbase werden in 35 ml Wasser suspendiert, mit 13,4 ml Dimethylsulfat 1 Stunde bei 20°C—25°C, 1 Stunde bei 30°C—35°C und 30 Minuten bei 50°C gerührt. Mit 85 %iger Ameisensäure wird der pH auf 1,8 bis 1,5 gestellt und diese Lösung 30 Minuten auf 95°C aufgeheizt. Es werden 50 ml Flüssigfarbstoff der Formel

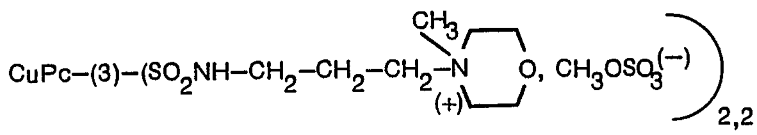

λ max 608 nm

erhalten, der Papiermasse in klaren Türkistönen bei sehr guter Bleichbarkeit färbt.

Ersetzt man das in Beispiel 13 verwendete N-(3-Aminopropyl)-morpholin durch äquimolare Mengen der Amine, die in der nach Beispiel 1 folgenden Tabelle genannt werden, so erhält man Farbstoffe der Formel

$$CuPc—(3)—(SO_2Z)_{2,2}$$

bei denen Z die in der genannten Tabelle aufgeführte Bedeutung hat. Auch diese Farbstoffe färben Papier aus neutralem bis saurem Bad in türkisblauen Farbtönen und lassen sich chemisch sehr gut bleichen.

Beispiel 14

16,2 g (15 mMol) der zwischenisolierten Farbstoffbase aus Beispiel 13 werden in einem Rührautoklaven in 40 ml Wasser suspendiert. Unter Rühren wird Methylchlorid bis zu einem Druck von 3 bis 5 bar aufgepreßt und die Temperatur in einer Stunde auf 40—50°C gesteigert. Man hält dann bei dieser Temperatur bis keine Druckabnahme mehr erfolgt. Der pH wird durch Zugabe von 0,5 g Magnesiumoxid leicht alkalisch gehalten. Nicht verbrauchtes Methylchlorid wird abgeblasen. Nach Zugabe von 10 ml 85 %iger Ameisensäure werden 50 ml Flüssigfarbstoff der Formel

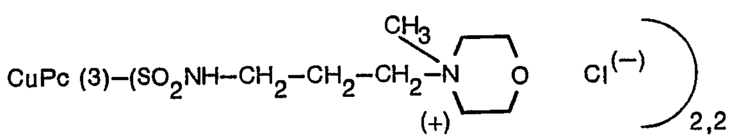

erhalten der in seinen Eigenschaften dem Beispiel 13 entspricht.

Beispiel 15

25 mMol einer feuchten CuPc-(3)-$(SO_2Cl)_{2,3}$-Paste werden in 125 ml Wasser suspendiert. Man gibt 3,5 ml Dimethylaminopropylamin zu und steigert die Temperatur auf 40°C. Der pH wird mit 2N-NaOH auf 10,3—10,5 gehalten. Sobald 13,5 ml 2N-NaOH verbraucht sind, wird auf 25°C abgekühlt, mit 2,65 ml Dimethylsulfat versetzt und 1 Stunde bei 25—30°C nachgerührt. Nach der Zugabe von 14,8 ml N-(2-Aminoethyl)-piperazin wird in 4 Stunden auf 70°C aufgeheizt. Die Farbstoffsuspension wird abgesaugt und mit Wasser gewaschen. Nach dem Trocknen erhält man 27,7 g Farbstoff der Formel

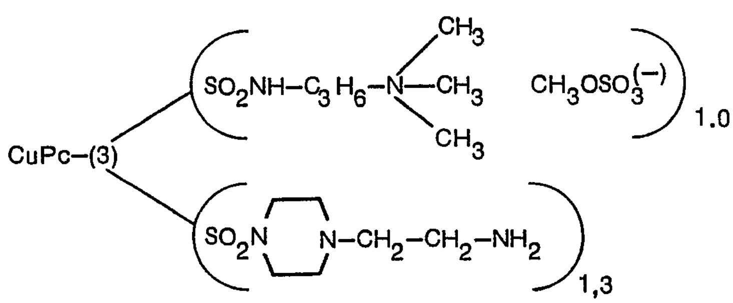

$\lambda_{max}$ 608 nm

der in verdünnter Essigsäure löslich ist und Papier in türkisblauen Tönen bei sehr guter chemischer Bleichbarkeit färbt.

Für eine Flüssigeinstellung wird der obige Farbstoff in 40 ml Wasser und 60 ml Eisessig durch 1-stündiges Rühren bei 70°C in Lösung gebracht und nach einer Klärfiltration auf 20—25°C abgekühlt.

Ersetzt man das im Beispiel 15 verwendete Dimethylaminopropylamin durch äquimolare Mengen der Amine, die in der nach Beispiel 1 folgenden Tabelle genannt werden, so erhält man Farbstoff der Formel

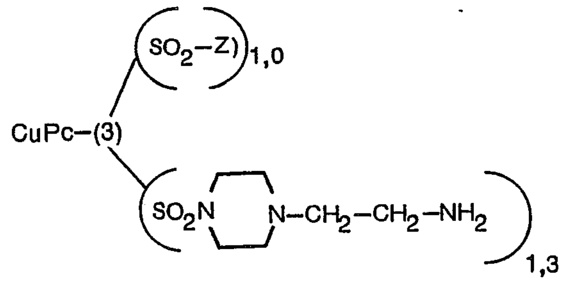

bei denen Z die in der genannten Tabelle aufgeführte Bedeutung hat. Auch diese Farbstoffe färben Papier aus saurer Lösung in türkisblauen Tönen bei sehr guter chemischer Bleichbarkeit.

Beispiel 16

16,0 g CuPc-(3)-$(SO_2Cl)_{2,3}$ (20 mMol) werden in Form einer wasserfeuchten Paste in 100 g Wasser angeschlagen. Man gibt 2,24 g (22 mMol) 1-Amino-3-dimethylaminopropan zu und läßt dieses unter Steigerung der Temperatur auf 40°C und Zugabe von 11 ml (22 mMol) 2n-Natronlauge bei pH 10,5 mit dem Kupferphthalocyanin-sulfonsäurechlorid reagieren. Nun kühlt man auf 25°C, gibt 0,2 g MgO und 2,78 g (22 mMol) Dimethylsulfat zu und rührt eine Stunde bei 25—30°C nach. Hierauf werden 13 g (90 mMol) Bis-(3-aminopropyl)-methylamin zugegeben, und die Temperatur des Reaktionsgemisches unter Rühren innerhalb 4 Stunden auf 70°C gesteigert. Anschließend saugt man den Farbstoff ab und wäscht kurz mit Wasser. Nach dem Trocknen erhält man 22,4 g Farbstoff der Formel

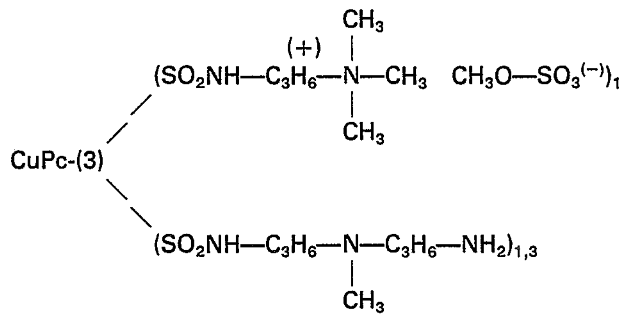

$\lambda_{max}$ = 605 nm

der in verdünnter Essigsäure löslich und zum Färben von Papier in türkisblauen Tönen hervorragend geeignet ist. Die erhaltenen Färbungen sind mit Chlorlauge gut bleichbar. Zur Herstellung einer Flüssigeinstellung wird der obige Farbstoff unter Zusatz von 40 g Wasser durch einstündiges Rühren bei 70°C in 60 g Essigsäure gelöst und die Lösung auf 25°C gekühlt.

Ersetzt man das in Absatz 1 verwendete 1-Amino-3-dimethylaminopropan durch äquimolare Mengen der in Spalte 2 der nachfolgenden Tabelle genannten Amine, so erhält man Farbstoffe der Formel

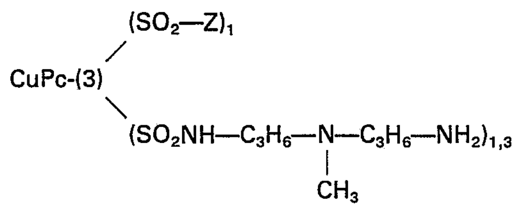

bei denen Z die in der nachfolgenden Tabelle Spalte 3 aufgezeigte Bedeutung hat. Auch diese Farbstoffe färben Papier aus essigsaurer Lösung in türkisblauen, gut bleichbaren Farbtönen.

| | Amin | Z | Farbe | $\lambda_{max}$ (nm) |
|---|---|---|---|---|
| 16b | 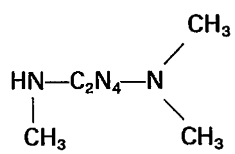 | 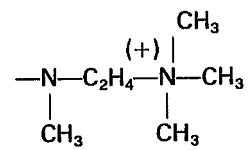 $CH_3O{-}SO_3^{(-)}$ | türkisblau | 605 |
| 16c | 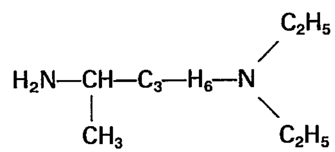 | 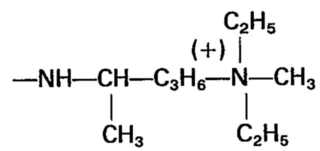 $CH_3O{-}SO_3^{(-)}$ | " | " |
| 16d | 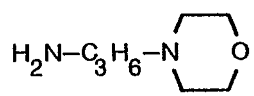 | 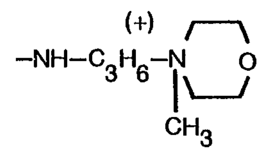 $CH_3O{-}SO_3^{(-)}$ | " | " |
| 16e | 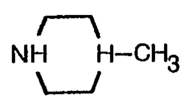 | 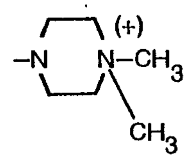 $CH_3O{-}SO_3^{(-)}$ | " | " |

Beispiel 17

16,0 g CuPc-(3)—$(SO_2Cl)_{2,3}$ (20 mMol) werden in Form einer wasserfeuchten Paste in 100 g Wasser angeschlagen. Man gibt 2,24 g (22 mMol) 1-Amino-3-dimethylaminopropan zu und läßt dieses unter Steigerung der Temperatur auf 40°C und Zugabe von 11 ml (22 mMol) 2n-Natronlauge bei einem pH von etwa 10,5 mit dem Kupferphthalocyaninsulfonsäurechlorid reagieren. Nun kühlt man auf 25°C ab, tropft 2,78 g (22 mMol) Dimethylsulfat zu und rührt eine Stunde bei 25°C—30°C nach. Hierauf werden 15,8 g (120 mMol) Bis-(3-aminopropyl)-amin zugegeben, und die Temperatur des Reaktionsgemisches unter Rühren innerhalb von 4 Stunden auf 70°C gesteigert. Anschließend saugt man den Farstoff ab und wäscht kurz mit Wasser. Nach dem Trocknen erhält man 22 g Farbstoff der Formel

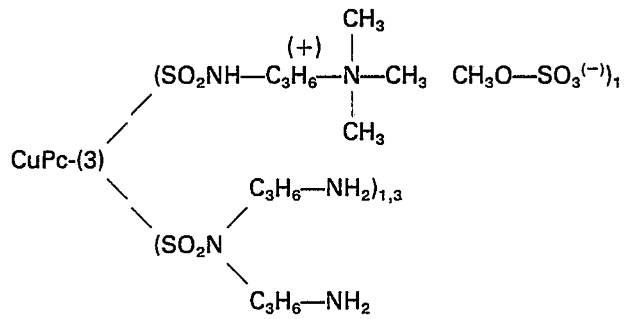

$\lambda_{max} = 605$ nm

der in verdünnter Essigsäure löslich und zum Färben von Papier in türkisblauen Tönen hervorragend geeignet ist. Die erhaltenen Färbungen sind mit Chlorlauge gut bleichbar. Zur Herstellung einer Flüssigeinstellung wird der obige Farbstoff unter Zusatz von 40 g Wasser durch einstündiges Rühren bei 70°C in 60 g Eisessig gelöst und die Lösung auf 25°C gekühlt.

Ersetzt man das in Absatz 1 verwendete Bis-(3-aminopropyl)amin durch äquimolekulare Mengen der in Spalte 2 der nachfolgenden Tabelle genannten Amine, so erhält man Farbstoffe der Formel

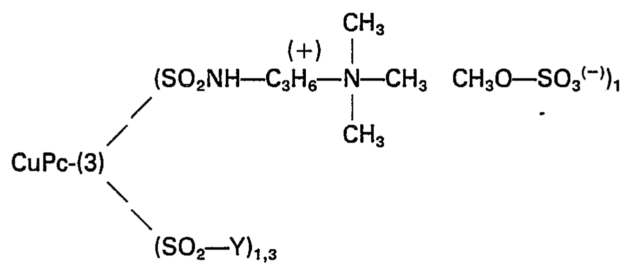

bei denen Y die in der nachfolgenden Tabelle Spalte 3 aufgezeigte Bedeutung hat. Die Farbstoffe färben Papier aus essigsaurer Lösung in türkisblauen, gut bleichbaren Farbtönen.

| | Amin | $Y^1$ | Farbton | $\lambda_{max}$ (nm) |
|---|---|---|---|---|
| 17b | $H_2N-C_2H_4-NH-C_2H_4-NH_2$ | 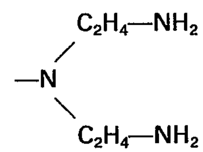 | türkisblau | 605 |
| 17c | $H_2N-(C_2H_4-HN)_2-C_2H_4-NH_2$ | 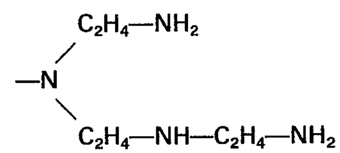 | " | " |
| 17d | $H_2N-(C_2H_4-NH)_3-C_2H_4-NH_2$ | 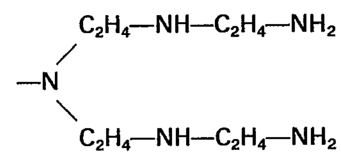 | " | " |
| 17e | $H_2N-(C_3H_6-NH)_2-C_3H_6-NH_2$ | 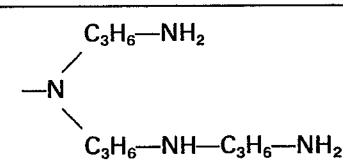 | " | " |

[1] Die unter Y aufgezeigten Konstitutionen müssen als Mischungen aufgefaßt werden, da jede der im Polyamin enthaltenden Amino-Gruppen mit der Sulfochlorid-Gruppe des Phthalocyanins reagieren kann.

Beispiel 18

Ein aus 50% gebleichtem Kiefernsulfat-Zellstoff und 50% gebleichtem Laubholzsulfat-Zellstoff bestehender Trockenstoff wird im Holländer mit Wasser angeschlagen und bis zum Mahlgrad 30 SR gemahlen, so daß der Trockengehalt etwas über 2,5% liegt, und anschließend mit Wasser auf exakt 2,5% Trockengehalt des Dickstoffes eingestellt.

200 Teile des Dickstoffes werden mit 5 Teilen einer schwach essigsauren 1,5 %igen wäßrigen Lösung des Farbstoffs aus Beispiel 16, Absatz 1 versetzt und ca. 5 Minuten verrührt. Man verdünnt dann die Masse mit etwa 500 Teilen Wasser und stellt hieraus in üblicher Weise durch Absaugen über einen Blattbildner Papierblätter her. Die Papierblätter weisen eine kräftige türkisblaue Färbung auf.

Verwendet man anstelle der ober genannten Farbstofflösung schwach essigsaure oder schwach ameisensaure 1—2 %ige Farbstofflösungen der Farbstoffe, die in der Tabelle von Beispiel 16 under 16 b bis e oder in Beispiel 17 beschrieben sind, so erhält man ebenfalls Papierblätter von kräftig türkisblauer Färbung.

Beispiel 19

Zu 200 g eines 2,5 %igen Papierbreies, bestehend aus 50% gebleichten Kiefernsulfat und 50% gebleichtem Birkensulfit mit einem Mahlgrad von SR 35° werden 0,5 g der Farbstoff-Flüssigeinstellung gemäß Beispiel 1, unter Rühren zugegeben. Anschließend wird mit 10 g einer 1 %igen Harzleim-Lösung und 20 g einer 1 %igen Aluminiumsulfat-Lösung geleimt und mit 500 g Wasser verdünnt. Nach 15-minütigem Rühren wird der gefärbte Papierbrei auf einen Blattbildner mit Filterpapierunterlage gegossen und abgesaugt. Das Papierblatt wird zwischen zwei Filterpapierblättern und gleichgroßen Filzen in einer Presse abgegautscht und danach auf einem Heißzylinder bei 100°C ca. 5 Minuten getrocknet. Man erhält ein brillant türkis gefärbtes Papier.

Wenn das auf diese Weise gefärbte Papier in Wasser aufschlägt und die erhaltene Suspension mit 1% aktivem Chlor (bezogen auf Papierstoff) bei pH 7 bis 2 behandelt, erhält man eine praktisch farblose Papiermasse zurück.

In analoger Weise lassen sich die anderen in Beispiel 1 beschriebenen Farbstoffe und die in den Beispielen 2—15 aufgezeigten Farbstoffe färben.

Beispiel 20

In einer Leimpressenlösung bestehend aus 50 g nicht ionogener Stärke und 20 g Leimungsmittel (ABS-Polymer) verrührt man 10 g der nach Beispiel 1 erhaltenen Farbstoff-Flüssigeinstellung und färbt die Rohpapiere oder schwach geleimten Papiere bei einer Durchgangsgeschwindigkeit von ca. 5 bis 7 m/min bei 20°C und einem Aufdruck von ca. 25% (Labor-Foulard Typ, Fa. W. Mathis, Niderhasli, Schweiz). Man erhält gleichmäßig brillant türkis gefärbte Papiere, die sich mit Hilfe von Chlorlauge gut bleichen lassen.

In analoger Weise lassen sich die anderen in Beispiel 1 sowie die in den Beispielen 2—17 beschriebenen Farbstoffe färben. Man erhält jeweils brillant türkis gefärbte Papiere mit guter Bleichbarkeit.

**Patentansprüche**

1. Basische Kupferphthalocyaninfarbstoffe der allgemeinen Formel

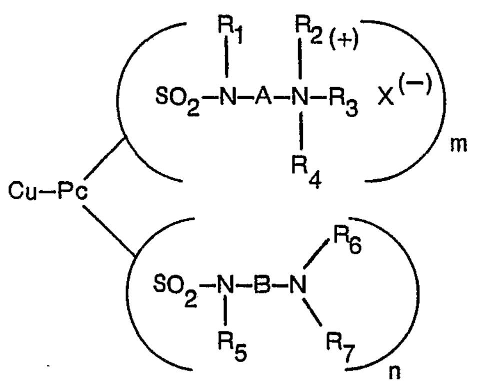

(I)

in der

Cu—Pc den Rest eines m + n-wertigen Kupferphthalocyaninrestes,

A Alkylen,

B einen Rest der Formel

$R_8$
|
—Alkylen—(N—Alkylen)$_p$—

$R_1$ Wasserstoff oder Alkyl,

$R_2$, $R_3$ und $R_4$ unabhängig voneinander Alkyl, das durch Hydroxy- oder Alkoxygruppen substituiert sein kann,

$R_5$ Wasserstoff, Alkyl oder Aminoalkyl,

$R_6$ und $R_7$ unabhängig voneinander Wasserstoff, oder Alkyl, das durch Hydroxy-, Alkoxy- oder Aminogruppen substituiert sein kann, und

$R_8$ Wasserstoff oder Alkyl bedeuten, oder

$R_1$ mit $R_2$,

$R_2$ mit $R_3$,

$R_5$ mit $R_6$ und/oder

$R_6$ mit $R_7$ ringgeschlossen sein können,

m eine Zahl von 1,0 bis 2,5 und

n eine Zahl von 0 bis 1,4 bedeuten, wobei

m + n 1,8 bis 2,5 ist,

p 0, 1, 2 oder 3 und

$X^{(-)}$ ein Anion bedeuten.

2. Basische Kupferphthalocyaninfarbstoffe gemäß Anspruch 1 der allgemeinen Formel

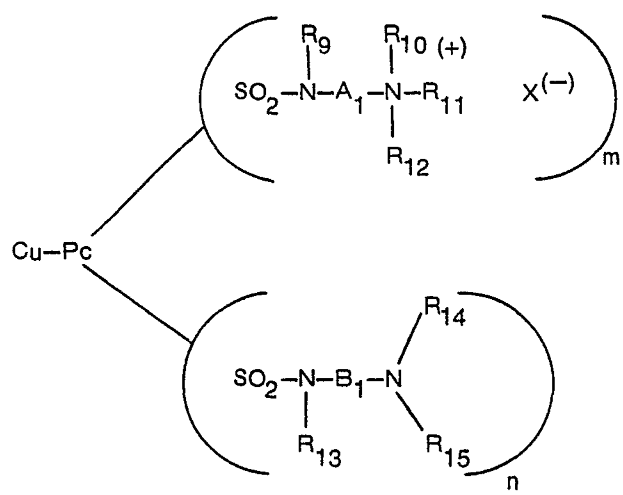

(II)

in der

Cu—Pc, p und $X^{(-)}$ die in Anspruch 1 angegebene Bedeutung haben, und

$A_1$ $C_2$—$C_5$-Alkylen,

$B_1$ einen Rest der Formel $R_{16}$

$C_2$- oder $C_3$-Alkylen-(N—$C_2$- oder $C_3$-Alkylen)$_p$—

$R_9$ Wasserstoff oder $C_1$—$C_4$-Alkyl,

$R_{10}$, $R_{11}$ und $R_{12}$ unabhängig voneinander Methyl oder $C_2$—$C_4$-Alkyl, das durch eine $C_1$—$C_4$-Alkoxy- oder eine oder zwei Hydroxygruppen substituiert sein kann,

$R_{13}$ Wasserstoff, Methyl, $C_2$—$C_4$-Alkyl, das durch eine Aminogruppe substituiert sein kann,

$R_{14}$ und $R_{15}$ unabhängig voneinander Wasserstoff, Methyl, $C_2$—$C_4$-Alkyl, das durch eine $C_1$—$C_4$-Alkoxy- oder Amino-Gruppe oder eine oder zwei Hydroxy-Gruppen substituiert sein kann, und

$R_{16}$ Wasserstoff oder $C_1$—$C_4$-Alkyl bedeuten, oder

$R_9$, $R_{10}$ und —N—$A_1$—N— gemeinsam einen Piperazinring bilden,

$R_{13}$, $R_{14}$ und —N—$B_1$—N— gemeinsam einen Piperazinring bilden,

$R_{10}$ und $R_{11}$ und/oder

$R_{14}$ und $R_{15}$ gemeinsam mit dem Stickstoffatom einen Pyrrolidin-, Piperidin-, Morpholin- oder Piperazinring bilden, der einen Methyl- oder einen gegebenenfalls durch Hydroxyl oder Amino substituierten $C_2$—$C_4$-Alkylrest tragen kann, und

die Summe von m und n = 2,0—2,3 ist.

3. Basische Kupferphthalocyaninfarbstoffe der Formel des Anspruchs 2, in der

$A_1$ für 1,2-Ethylen oder 1,3-Propylen,

$R_9$ und $R_{13}$ für Wasserstoff oder Methyl,

$R_{10}$, $R_{11}$, $R_{12}$ unabhängig voneinander für Methyl, Ethyl, 2-Hydroxyethyl oder 2,3-Dihydroxypropyl,

$R_{14}$ und $R_{15}$ unabhängig voneinander für Wasserstoff, Methyl oder Ethyl und
$R_{16}$ für Wasserstoff oder Methyl stehen, oder
$R_9$, $R_{10}$ und —N—$A_1$—N— gemeinsam einen Piperazinring bilden,
$R_{10}$ und $R_{11}$ gemeinsam mit dem Stickstoffatom einen Morpholinring bilden, und/oder
$R_{13}$, $R_{14}$ und —N—$B_1$—N— gemeinsam einen Piperazinring bilden.

4. Verfahren zur Herstellung von kationischen Kupferphthalocyaninfarbstoffen des Anspruchs 1, dadurch gekennzeichnet, daß man Sulfonsäurechloride der allgemeinen Formel

$$Cu—Pc—(SO_2C1)_{m+n}$$

mit m Mol eines Amins der Formel

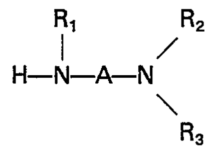

und gegebenenfalls anschließenden mit n Mol eines Amins der Formel

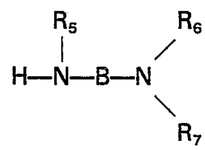

in Wasser oder einer Mischung aus Wasser und einem mit Wasser mischbaren organischen Lösungsmittel, umsetzt und mindestens eine der basischen Gruppen pro Molekül mit einer Verbindung der Formel

$$R_4—X$$

quaterniert.

5. Verfahren nach Anspruch 4, dadurch gekennzeichnet, daß man die erhaltenen Farbstoffe entweder isoliert oder durch Zugabe einer Carbonsäure der Formel

$$R_{17}—COOH$$

worin $R_{17}$ für Wasserstoff oder gegebenenfalls durch Chlor, Hydroxy, $C_1$—$C_4$-Alkoxy oder Carboxy substituiertes $C_1$—$C_4$-Alkyl steht,
oder deren Mischungen,
gegebenenfalls überschüssiges Quaternierungsmittel zerstört und den Farbstoff in Lösung bringt.

6. Verwendung der kationischen Kupferphthalocyaninfarbstoffe des Anspruchs 1 zum Färben und Bedrucken von Papier.

7. Wäßrige Lösungen, die einen Farbstoff des Anspruchs 1 enthalten.

**Revendications**

1. Colorants basiques de la classe des dérivés de cuivre de phtalocyanine, de formule générale

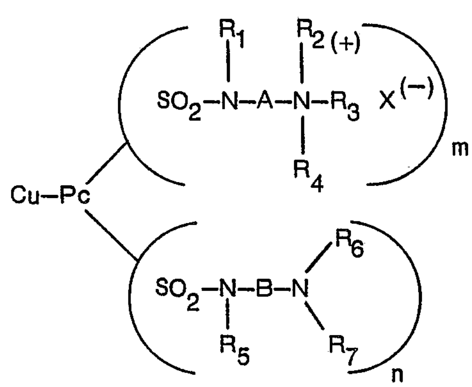

(I)

dans laquelle
Cu—Pc est un reste de dérivé de cuivre de phtalocyanine de valence m + n,

A est un groupe alkylène,
B est un reste de formule

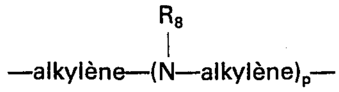

$R_1$ est l'hydrogène ou un groupe alkyle,
$R_2$, $R_3$ et $R_4$ représentent indépendamment les uns des autres un groupe alkyle qui peut être substitué par des groupes hydroxy ou alkoxy,
$R_5$ est l'hydrogène, un groupe alkyle ou un groupe aminoalkyle,
$R_6$ et $R_7$ représentent indépendamment l'un de l'autre l'hydrogène ou un groupe alkyle qui peut être substitué par des groupes hydroxy, alkoxy ou amino, et
$R_8$ désigne l'hydrogène ou un groupe alkyle, ou bien une cyclisation est possible entre
$R_1$ et $R_2$,
$R_2$ et $R_3$,
$R_5$ et $R_6$ et/ou
$R_6$ et $R_7$
m est un nombre de 1,0 à 2,5 et
n est un nombre de 0 à 1,4,
la somme m + n a une valeur de 1,8 à 2,5,
p a la valeur 0, 1, 2 ou 3 et
$X^{(-)}$ est un anion.

2. Colorants basiques de la classe des dérivés de cuivre de phtalocyanine suivant la revendication 1, de formule générale

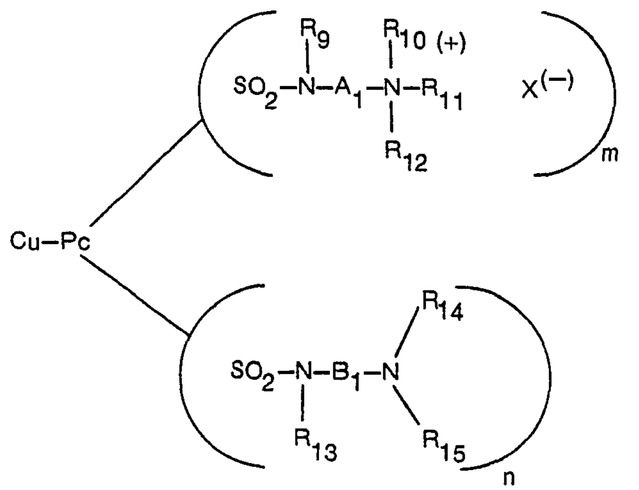

(II)

dans laquelle
Cu—Pc, p et $X^{(-)}$ ont la définition indiquée dans la revendication 1, et
$A_1$ est un groupe alkylène en $C_2$ à $C_5$,
$B_1$ est un reste de formule $R_{16}$, alkylène en $C_2$ ou $C_3$ —(N-alkylène en $C_2$ ou $C_3)_p$—,
$R_9$ est l'hydrogène ou un groupe alkyle en $C_1$ à $C_4$,
$R_{10}$, $R_{11}$ et $R_{12}$ représentent indépendamment les uns des autres le groupe méthyle ou un groupe alkyle en $C_2$ à $C_4$ qui peut être substitué par un groupe alkoxy en $C_1$ à $C_4$ ou par un ou deux groupes hydroxy,
$R_{13}$ est l'hydrogène, le groupe éthyle, un groupe alkyle en $C_2$ à $C_4$, qui peut être substitué par un groupe amino,
$R_{14}$ et $R_{15}$ représentent indépendamment l'un de l'autre l'hydrogène, le groupe méthyle, un groupe alkyle en $C_2$ à $C_4$ qui peut être substitué par un groupe alkoxy en $C_1$ à $C_4$ ou un groupe amino ou par un ou deux groupes hydroxy, et
$R_{16}$ est l'hydrogène ou un groupe alkyle en $C_1$ à $C_4$, ou bien,
$R_9$, $R_{10}$ et —N—$A_1$—N— forment ensemble un noyau de pipérazine,
$R_{13}$, $R_{14}$ et —N—$B_1$—N— forment ensemble un noyau de pipérazine,
$R_{10}$ et $R_{11}$ et/ou
$R_{14}$ et $R_{15}$ forment conjointement avec l'atome d'azote un noyau de pyrrolidine, pipéridine, morpholine ou pipérazine qui peut porter un reste méthyle ou un reste alkyle en $C_2$ à $C_4$ éventuellement substitué par un radical hydroxyle ou amino, et
la somme de m et n a une valeur de 2,0 à 2,3.

3. Colorants basiques de la classe de dérivés de cuivre de phtalocyanine de formule suivant la revendication 2, dans laquelle

$A_1$ est le groupe 1,2-éthylène ou 1,3-propylène,

$R_9$ et $R_{13}$ représentent l'hydrogène ou le groupe méthyle,

$R_{10}$, $R_{11}$, $R_{12}$ représentent indépendamment les uns des autres un groupe méthyle, éthyle, 2-hydroxyéthyle ou 2,3-dihydroxypropyle,

$R_{14}$ et $R_{15}$ représentent indépendamment l'un de l'autre l'hydrogène, le groupe méthyle ou le groupe éthyle et

$R_{16}$ est l'hydrogène ou le groupe méthyle, ou bien

$R_9$, $R_{10}$ et —N—$A_1$—N— forment conjointement un noyau de pipérazine,

$R_{10}$ et $R_{11}$ forment conjointement avec l'atome d'azote, un noyau de morpholine et/ou

$R_{13}$, $R_{14}$ et —N—$B_1$—N— forment ensemble un noyau de pipérazine.

4. Procédé de production de colorants cationiques de la classe des dérivés de cuivre de phtalocyanine suivant la revendication 1, caractérisé en ce qu'on fait réagir des chlorures d'acides sulfoniques de formule générale

$$Cu—Pc—(SO_2C1)_{m+n}$$

avec m moles d'une amine de formule

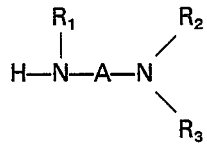

puis, le cas échéant, avec n moles d'une amine de formule

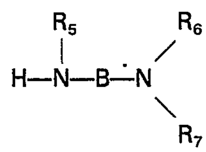

dans l'eau ou dans un mélange d'eau et d'un solvant organique miscible à l'eau, et on quaternise, par molécule, au moins l'un des groupes basiques avec un composé de formule $R_4$—X.

5. Procédé suivant la revendication 4, caractérisé en ce qu'on isole les colorants obtenus ou bien on détruit l'agent de quaternisation éventuellement en excès par addition d'un acide carboxylique de formule

$$R_{17}—COOH$$

dans laquelle $R_{17}$ représente l'hydrogène ou un groupe alkyle en $C_1$ à $C_4$ éventuellement substitué par un radical chloro, hydroxy, alkoxy en $C_1$ à $C_4$ ou carboxy, ou leurs mélanges,
et on fait passer le colorant en solution.

6. Utilisation des colorants cationiques de la classe de dérivé de cuivre de phtalocyanine suivant la revendication 1 pour la coloration et l'impression de papier.

7. Solutions aqueuses qui contiennent un colorant suivant la revendication 1.

**Claims**

1. Basic copper phthalocyanine dyestuffs of the general formula

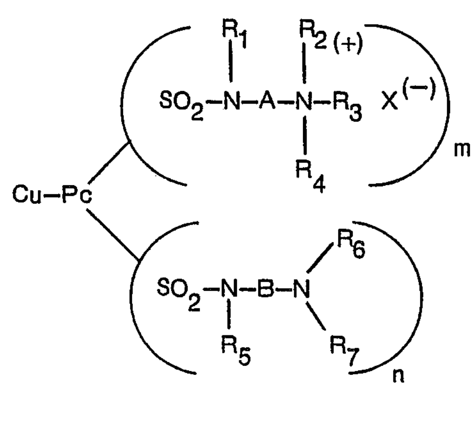

(I)

in which

Cu—Pc denotes the radical of an m + n-valent copper phthalocyanine radical,

A denotes alkylene,

B denotes a radical of the formula

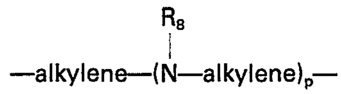

$R_1$ denotes hydrogen or alkyl,

$R_2$, $R_3$ et $R_4$, independently of one another, denote alkyl which can be substituted by hydroxyl or alkoxy groups,

$R_5$ denotes hydrogen, alkyl or aminoalkyl,

$R_6$ and $R_7$, independently of each other, denote hydrogen or alkyl which can be substituted by hydroxyl, alkoxy or amino groups, and

$R_8$ denotes hydrogen or alkyl, or

$R_1$ can form a closed ring with $R_2$,

$R_2$ can form a closed ring with $R_3$,

$R_5$ can form a closed ring with $R_6$ and/or

$R_6$ can form a closed ring with $R_7$,

m denotes a number from 1.0 to 2.5,

n denotes a number from 0 to 1.4,

m + n is 1.8 to 2.5,

p denotes 0, 1, 2 or 3 and

$X^{(-)}$ denotes an anion.

2. Basic copper phthalocyanine dyestuffs according to Claim 1 of the general formula

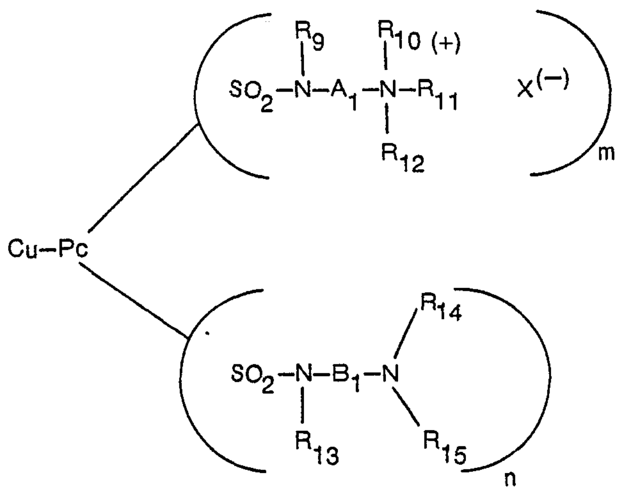

(II)

in which

Cu—Pc, p and $X^{(-)}$ have the meaning given in Claim 1 and

$A_1$ denotes $C_2$—$C_5$-alkylene

$B_1$ denotes a radical of the formula $R_{16}$,

$C_2$- or $C_3$-alkylene-(N-$C_2$- or $C_3$-alkylene)$_p$—

$R_9$ denotes hydrogen or $C_1$—$C_4$-alkyl,

$R_{10}$, $R_{11}$ and $R_{12}$, independently of one another, denote methyl or $C_2$—$C_4$-alkyl which can be substituted by a $C_1$—$C_5$-alkoxy or one or two hydroxyl groups,

$R_{13}$ denotes hydrogen, methyl or $C_2$—$C_4$-alkyl which can be substituted by an amino group,

$R_{14}$ and $R_{15}$, independently of one another, denote hydrogen, methyl or $C_2$—$C_4$-alkyl which can be substituted by a $C_1$—$C_4$-alkoxy or amino group or one or two hydroxyl groups, and

$R_{16}$ denotes hydrogen or $C_1$—$C_4$-alkyl, or

$R_9$, $R_{10}$ and —N—$A_1$—N— conjointly form a piperazine ring,

$R_{13}$, $R_{14}$ and —N—$B_1$—N— conjointly form a piperazine ring,

$R_{10}$ and $R_{11}$ and/or

$R_{14}$ and $R_{15}$ conjointly with the nitrogen atom form a pyrrolidine, piperidine, morpholine or piperazine ring which can carry a methyl or an optionally hydroxyl- or amino-substituted $C_2$—$C_4$-alkyl radical, and

the sum of m and n = 2.0—2.3.

3. Basic copper phthalocyanine dyestuffs of the formula of Claim 2, in which

$A_1$ represents 1,2-ethylene or 1,3-propylene,

$R_9$ and $R_{13}$ represent hydrogen or methyl

$R_{10}$, $R_{11}$ and $R_{12}$, independently of one another, represent methyl, ethyl, 2-hydroxyethyl or 2,3-dihydroxypropyl,

$R_{14}$ and $R_{15}$, independently of each other, represent hydrogen, methyl or ethyl, and

$R_{16}$ represents hydrogen or methyl, or

$R_9$, $R_{10}$ and —N—$A_1$—N— conjointly form a piperazine ring,

$R_{10}$ and $R_{11}$ conjointly with the nitrogen atom form a morpholine ring, and/or

$R_{13}$, $R_{14}$ and —N—$B_1$—N— conjointly form a piperazine ring.

4. A process for preparing cationic copper phthalocyanine dyestuffs of Claim 1, characterised in that sulphonyl chlorides of the general formula

$$Cu—Pc—(SO_2C1)_{m+n}$$

are reacted with m mol of an amine of the formula

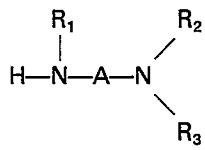

and, if appropriate, then with n mol of an amine of the formula

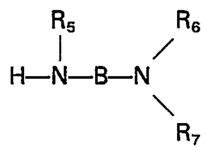

in water or a mixture of water and a water-miscible organic solvent, and at least one of the basic groups per molecule is quaternised with a compound of the formula $R_4$—X.

5. A process according to Claim 4, characterised in that either the dyestuffs obtained are isolated or, by adding a carboxylic acid of the formula

$$R_{17}—COOH$$

wherein $R_{17}$ represents hydrogen or optionally chlorine-, hydroxyl-, $C_1$—$C_4$-alkoxy- or carboxyl-substituted $C_1$—$C_4$-alkyl, or mixtures thereof, any excess quaternising agent present is destroyed and the dyestuff is brought into solution.

6. Use of cationic copper phthalocyanine dyestuffs of Claim 1, for dyeing and printing paper.

7. Aqûeous solutions which contain a dyestuff of Claim 1.